(19) Europäisches Patentamt
European Patent Office
Office européen des brevets

(11) Veröffentlichungsnummer: **0 439 732 A2**

(12) **EUROPÄISCHE PATENTANMELDUNG**

(21) Anmeldenummer: **90123382.5**

(22) Anmeldetag: **06.12.90**

(51) Int. Cl.5: **C08K 5/13**, C08L 77/00, //(C08L77/00,81:04)

(30) Priorität: **30.01.90 DE 4002605**

(43) Veröffentlichungstag der Anmeldung: **07.08.91 Patentblatt 91/32**

(84) Benannte Vertragsstaaten: **DE FR GB IT NL**

(71) Anmelder: **BAYER AG**
**W-5090 Leverkusen 1 Bayerwerk(DE)**

(72) Erfinder: **Heinz, Hans-Detlef, Dr.**
**Breslauerstrasse 31**
**W-4150 Krefeld(DE)**
Erfinder: **El-Sayed, Aziz, Dr.**
**Saarlauternerstrasse 39**
**W-5090 Leverkusen(DE)**
Erfinder: **Klöker, Werner, Prof. Dr.**
**Deswatines-Strasse 26**
**W-4150 Krefeld(DE)**
Erfinder: **Dujardin, Ralf, Dr.**
**Bodelschwinghstrasse 18**
**W-4150 Krefeld(DE)**

# (54) Polyamidformmassen.

(57) Die Erfindung betrifft Polyamid-Formmassen auf Basis aliphatischer Polyamide mit sehr guten Eigenschaften, dadurch gekennzeichnet, daß neben den Polyamiden A) vergleichsweise geringe Mengen an

B) Polyarylensulfiden und

C) ausgewählten polyphenolischen Verbindungen

anwesend sind.

Weiterhin wird ein Verfahren zur Herstellung der erfindungsgemäßen Polyamid-Formmassen sowie die Verwendung der erfindungsgemäßen Formmassen zur Herstellung von Formkörpern, Folien, Fasern, Halbzeugen, Verbundwerkstoffen und anderen Gegenständen beansprucht.

EP 0 439 732 A2

## POLYAMIDFORMMASSEN

Die Erfindung betrifft Polyamid-Formmassen auf Basis aliphatischer Polyamide A) mit sehr guten Eigenschaften, dadurch gekennzeichnet, daß neben den Polyamiden vergleichsweise geringe Mengen an Polyarylensulfiden B) und ausgewählten polyphenolischen Verbindungen C) anwesend sind.

Weiterhin wird ein Verfahren zur Herstellung der erfindungsgemäßen Polyamid-Formmassen sowie die Verwendung der erfindungsgemäßen Formmassen zur Herstellung von Formkörpern, Folien, Fasern, Halbzeugen, Verbundwerkstoffen und anderen Gegenständen beansprucht.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen Polyamidbildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern), zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch verwendet.

Ein Nachteil der Polyamide als Werkstoffklasse liegt in ihrer hohen Wasseraufnahme, bedingt durch die Polarität und Hydrophilie der Amidgruppen. Das als Weichmacher wirkende Wasser erhöht zwar die Duktilität des Materials, jedoch sinken Steifigkeit und Festigkeit stark ab. Die Wasseraufnahme ist daher ein limitierender Faktor für die weitere Verbreitung von Polyamiden in bestimmten Anwendungsgebieten.

Methoden, die Wasseraufnahme von Polyamiden signifikant zu verringern, wobei auch andere Eigenschaften wie Fließfähigkeit, Oberflächengüte und UV-Stabilität verbessert sein können, sind beispielsweise in den eigenen Patentanmeldungen DOS 3 248 329, EP 0 240 887 und DOS 3 610 595 beschrieben. Dabei werden phenolische Verbindungen als Additive den Polyamiden zugesetzt. Die resultierenden Formmassen weisen sehr gute Eigenschaften auf und sind vorteilhafterweise z.B. für alle Anwendungen, die eine erhöhte Dimensionsstabilität erfordern, einsetzbar. Phenolhaltige Polyamide sind auch noch beispielsweise in UDSSR 687 088 sowie bei V.N. Stepanov, A.A. Speranskii, L.S. Gerasimova, G.V. Khutareva, Khim. Volokna 1978 (6), 51; V.N. Stepanov, A.V. Dolgov, A.A. Speranskii, Khim. Volokna 1977 (4), 31; V.N. Stepanov, V.F. Lednik, A.I. Lubnina, A.A. Speranskii, Khim. Volokna 1975 (4), 32; S.I. Shkusenko, V.M. Kharitonov, B.A. Khar'Kov, et al., Khim. Volokna 1983 (5), 25 beschrieben. Viele der in den genannten Patentanmeldungen bzw. Artikeln beschriebenen Verbindungen fanden später noch einmal in JA 60/051 744, 60/051 745 und WO 88/06169 Erwähnung.

Die Verwendung Polyphenol-haltiger Polyamidmassen zur Herstellung verstärkter Halbzeuge/Verbundwerkstoffe durch z.B. Pultrusion oder "film-stacking" ist in der eigenen, bislang unveröffentlichten Patentanmeldung P 3 934 710.9 (Le A 27 095) beschrieben.

Die relativ hohe Konzentration phenolischer OH-Gruppen kann jedoch, z.B. bei der Verarbeitung, bei der Schnellkonditionierung mit heißem Wasser oder auch bei erhöhten Einsatztemperaturen, zu Verfärbungen führen. Es wäre daher wünschenswert, Polyamidmassen mit verringerter Wasseraufnahme und verbesserter Farbe bzw. Farbstabilität bereitzustellen. Weiterhin wäre es wünschenswert, die mechanischen Eigenschaften noch weiter zu verbessern sowie die Erstarrungsgeschwindigkeit beim Abkühlen und die Wärmeformbeständigkeit zu erhöhen.

Überraschend wurde nun gefunden, daß durch Zusatz relativ geringer Mengen an polymeren Additiven mit dem überwiegenden Strukturelement (I) (Polyarylensulfiden)

$$-\!\!\left[ Ar-S \right]\!\!- \qquad (I),$$

wobei

Ar

einen gegebenenfalls substituierten Arylenrest bedeutet, vorzugsweise einen p-Phenylen-Rest (Polyphenylensulfid),

die Farbe bzw. Farbstabilität phenolhaltiger Polyamide verbessert werden kann. Gleichzeitig werden andere gewünschte Eigenschaftsveränderungen erreicht.

Gegenstand der Erfindung sind daher Polyamid-Formmassen, enthaltend

A) mindestens 50 Gew.-% aliphatischer Polyamide,
B) 0,1 - ungefähr 40 Gew.-% an polymeren Additiven mit überwiegendem Strukturelement (I),

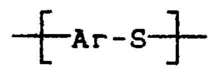

(I)

wobei Ar einen gegebenenfalls substituierten Arylenrest, vorzugsweise einen Phenylenrest bedeutet,
C) 1 bis 25 Gew.-% an Bis- oder Polyphenolen, die keine tertiären Alkylgruppen ortho-ständig zu den OH-Gruppen tragen sollen

sowie gegebenenfalls

D) bis 150 Gew.-%, bezogen auf die Summe von A)-C), weiterer üblicher Zusatzstoffe.

Gegenstand der Erfindung ist weiterhin ein Verfahren zur Herstellung der erfindungsgemäßen Formmassen durch Vermischen der Komponenten in der Schmelze sowie ihre Verwendung zur Herstellung von Formkörpern, Folien, Fasern, Halbzeugen, Verbundwerkstoffen und anderen Gegenständen.

Die polymeren Additive B) mit dem überwiegenden Strukturmerkmal (I) sind Arylensulfid-Homo- und/oder Copolymere, wobei der Costruktur-Anteil < 50 Mol-% sein soll.

Ein geeignetes Beispiel für einen Arylenrest -Ar- in Formel (I) ist der p-Phenylenrest (II),

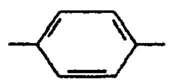

(II)

der gleichzeitig bevorzugter Rest-Ar- ist.

Bevorzugte Additive B) sind daher teilkristalline Homo-und/oder Copolymere (Polyarylensulfide) mit dem überwiegenden Strukturmerkmal (III),

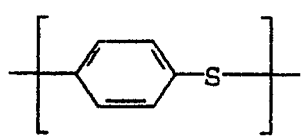

(III)

besonders bevorzugt ist das Homopolymere des Bausteins (III), Poly-p-phenylensulfid (PPS).

Geeignete Comonomere bei der Herstellung von (Co)Polyarylensulfiden sind z.B. (IV) und (V).

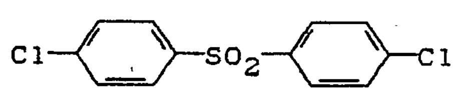

(IV)

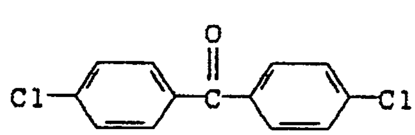

(V)

Sie ergeben dann Copolyarylensulfide mit z.B. $-SO_2-$ und/oder

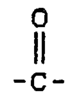

Gruppen.

Die erfindungsgemäß einzusetzenden polymeren Additive B) sind bekannte Stoffe oder können nach prinzipiell bekannten Verfahren hergestellt werden.

Bevorzugt werden solche Arylensulfidpolymere eingesetzt, die ohne nachträglichen oxidativen Molekulargewichtsaufbau, sondern in einem Schritt in Lösung direkt zu hohen Molekulargewichten kondensiert wurden. Verfahren zu ihrer Herstellung sind bekannt, siehe z.B. EP 0 171 021. Entsprechende Polyarylensulfide sind beispielweise unter den Namen ®Tedur oder ®Fortron kommerziell erhältlich.

Geeignet sind Polymere B) mit Schmelzviskositäten (bei 320 °C und 1000 $s^{-1}$) von ungefähr 5 bis ungefähr 500 Pa.s, bevorzugt 10 bis 200 Pa.s, besonders bevorzugt 10 bis 150 Pa.s. Sie können als Granulat oder als Pulver oder auch in anderer Form eingesetzt werden.

Bevorzugte Bis- bzw. Polyphenole C) weisen die allgemeine Formel (VI) auf,

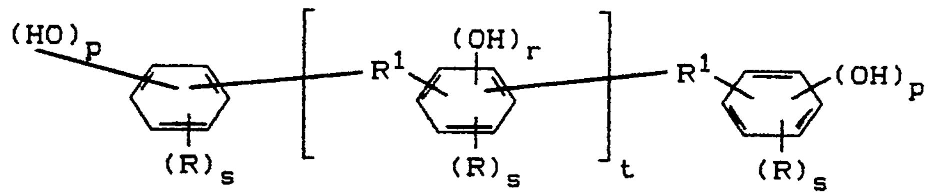

(VI)

wobei

R

unabhängig voneinander Wasserstoff (H), $C_1$-$C_{20}$-(Ar)Alkyl (vorzugsweise Methyl), und $C_6$-$C_{18}$-(Alk)aryl, bzw. $C_{1-20}$-(Ar)alkyloxy- und $C_6$-$C_{18}$-(Alk)aryloxyreste,

$R^1$

unabhängig voneinander eine chemische Bindung, einen $C_1$-$C_{20}$-Alkylen oder (gegebenenfalls cyclischen) Alkyliden-Rest, eine Ester-, eine Amidgruppe, -O-, -SO-, $-SO_2-$, -S-, -CO-,

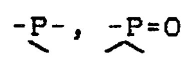

oder auch eine Annellierung zweier oder mehrerer Ringe,

P

1 oder 2, besonders bevorzugt 1,

r

für die Zahlen 0, 1 oder 2, besonders bevorzugt 1,

s

für die Zahlen 0, 1 oder 2, besonders bevorzugt 0 oder 1,

t

eine Zahl von 0-15 (Mittelwert), besonders bevorzugt 0-12, insbesondere 0-10,

bedeuten, und wobei kein zu einer OH-Gruppe orthoständiger Rest eine tertiäre Alkylgruppe sein soll.

Bevorzugte Verbindungen der Formel (VI) sind 2,2-(bis-4-hydroxy-phenyl)-propan (Bisphenol A), Bis-4-hydroxyphenylmethan (Bisphenol F), 1,1-(Bis-4-hydroxyphenyl)-cyclohexan (Bisphenol Z), 2,2-Bis-(4-hydroxy-3,5-dimethylphenyl)-propan, 1,1-Bis(4-hydroxyphenyl)-3,3,5-trimethylcyclohexan, 4,4'-Dihydroxydiphenylsulfon sowie Phenol- bzw. Alkylphenol-Formaldehyd Kondensate (Novolake), vorzugsweise aus den genannten Phenolen.

Als Novolake sind insbesondere die der Formel (VII),

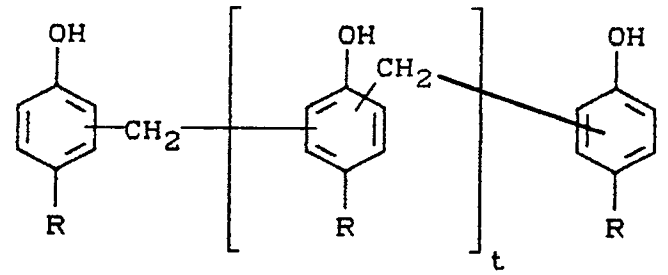

(VII)

worin

R

Wasserstoff oder $C_{1-5}$-Alkyl oder Phenyl, insbesondere Wasserstoff, und t eine ganze Zahl von (Mittelwert) 1 bis 10 bedeuten, so daß ihr Molekulargewicht ($\overline{M}n$) zwischen ca. 300 und ca. 1500 g/mol$^{-1}$ liegt, bevorzugt.

Die phenolischen Mischungsbestandteile C) können einzeln oder im Gemisch eingesetzt werden. Es können auch Isomerengemische bzw. Reaktionsrohprodukte eingesetzt werden.

Die phenolischen Mischungsbestandteile C) sind prinzipiell bekannt oder können nach prinzipiell bekannten Verfahren hergestellt werden.

Die Bis- bzw. Polyphenole C) werden i.a. bevorzugt zu 2-20 Gew.-% und besonders bevorzugt zu 5-15 Gew.-% eingesetzt. In besonderen Fällen, z.B. bei Pultrusionsanwendungen oder zur Herstellung anderer Verbundwerkstoffe, können auch Mengen von bis zu 25 Gew.-% bevorzugt und bis zu 20 % besonders bevorzugt sein.

Die polymeren Additive B) werden i.a. bevorzugt zu 0,4-20 und besonders bevorzugt zu 0,5-10 Gew.-% eingesetzt. In besonderen Fällen, z.B. dann, wenn eine besondere Flammfestigkeit gewünscht wird, liegt die bevorzugte Maximalmenge bei 20 Gew.-% und insbesondere bei 15 Gew.-%.

Die Summe an B) plus C) soll maximal 50 Gew.-% von (A + B + C) betragen; bei Vorliegen einer hohen Menge der einen Komponente ist die andere entsprechend zu beschränken.

Als Polyamide A) sind beispielsweise und bevorzugt geeignet:

PA6, 66, 610, 69, 46, 11, 12, 1212, 6/66-Copolyamide, Copolyamide auf Basis von Terephthalsäure, Hexamethylendiamin und Caprolactam oder Adipinsäure und andere Copolyamide auf Basis PA6 oder 66.

Besonders bevorzugt sind PA6, 66 sowie Mischungen von oder Copolyamide auf Basis PA6 bzw. 66.

Als Zusatzstoffe D) sind beispielsweise geeignet: Füllstoffe bzw. Verstärkungsstoffe (Glasfasern, Glaskugeln, Kohlenstoffasern, Aramidfasern, $TiO_2$, mineralische Füllstoffe u.a.m.), UV-Stabilisatoren, Lichtstabilisatoren, Antioxidantien, polymere Legierungspartner, Pigmente, Farbstoffe, Nukleierungsmittel, Kristallisationsbeschleuniger-bzw. Verzögerer, Fließhilfsmittel, Gleitmittel, Entformungsmittel, Flammschutzmittel, u.a.m., wie sie im Stand der Technik beschrieben sind.

Als polymere Legierungspartner kommen z.B. in Betracht: Dienkautschuke, Acrylat-Kautschuke, Polyethylene, Polypropylene, Ethylen-Propylen-Copolymere, Ethylen-1-Buten-Copolymere, Ethylen-Propylen-Dien-Terpolymere, Ethylen-Acrylsäure/Acrylester-Terpolymere, Ethylen-Vinylacetat-Copolymere, Polyoctenylene, Polystyrole, ($\alpha$-Methyl)Styrol-(Meth)acrylnitrilcopolymere, (Meth)Acrylnitril-Butadien-($\alpha$-Methyl)Styrol-Polymere (ABS), schlagzähe Polystyrole, Polycarbonate, aromatische Polyester(carbonate), Polyester wie z.B. Polyethylenterephthalat, Polysulfone, Polyphenylenoxide, Polyetherketone, Polyetheretherketone, Polyamidimide, Polyethersulfone, Polyetherimide, Polyesterimide, und Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgen kann. Möglichkeiten hierzu sind im Stand der Technik beschrieben und grundsätzlich bekannt (z.B. über Carbonsäure- oder Carbonsäureanhydridgruppen oder Carbonsäure-(t.-alkyl)ester oder Aminogruppen).

Auch mit den erfindungsgemäß einzusetzenden Polyamiden verträgliche und/oder unverträgliche amorphe Polyamide können als Zusatzstoff eingesetzt werden; z.B. können PA 6 I (Polyhexamethylenisophthalamid) als amorphe PA oder auch Polyamide aus Isophthalsäure, Terephthalsäure, Hexamethylendiamin und gegebenenfalls 4,4'-Diaminodicyclohexylmethan eingesetzt werden.

Bevorzugte Legierungspartner sind solche, die üblicherweise zur Erhöhung der Kälte- und/oder Trockenschlagzähigkeit eingesetzt werden (Schlagzähmodifikatoren).

Die Zusatzstoffe D) sind in Mengen von bis zu 150 %, bezogen auf A)-C), bevorzugt 0,01 bis 100 %, in

den Mischungen anwesend.

Die Herstellung der erfindungsgemäßen Polyamidformmassen erfolgt, gegebenenfalls in mehreren Schritten, durch Mischen der Komponenten in der Schmelze, bevorzugt in Knetern oder Extrudern. Alle zur Abmischung von Thermoplasten üblichen Verfahren können angewendet werden. Die Zusatzstoffe B)-D) können in Form der reinen Substanzen oder als Konzentrate eingesetzt werden.

Die erfindungsgemäßen Mischungen können nach verschiedenen Verfahren, z.B. Spritzguß, Extrusion, Pultrusion, "film-stacking" u.a.m., zu Formkörpern, Folien, Fasern, verstärkten Halbzeugen, Verbundwerkstoffen (Composites) u.a.m. verarbeitet werden. Diese sind ebenfalls Gegenstand der Erfindung.

Zur Herstellung von verstärkten Halbzeugen/Verbundwerkstoffen sind Füllgrade von 20-90 Gew.-%, bevorzugt 30-85 Gew.-% und insbesondere 40-85 Gew.-% an üblichen Verstärkungsstoffen (z.B. Endlosfasern, Matten, Vliese, Rovings, z.B. auf Basis von Glasfasern, Kohlenstofffasern, Aramidfasern, PAN-Fasern, Metallfasern u.a.m.), wie sie im Stand der Technik für Verbundwerkstoffe (Composites) beschrieben sind, geeignet.

Weitere Einzelheiten hierzu finden sich in der eigenen, bisher unveröffentlichten Patentanmeldung P 3 934 710 9.

Polyarylensulfide enthaltende Polyamidmassen sind beispielsweise in US 4 292 416 beschrieben; die genannte Anmeldung enthält keinerlei Hinweis auf die Verwendung von Kombinationen aus Bis- bzw. Polyphenolen und Polyarylensulfiden. Weiterhin enthält die genannte Anmeldung keinerlei Hinweise auf eine farbverbessernde Wirkung von Polyarylensulfiden in Polyamiden.

Polyarylensulfid enthaltende PA46-Massen sind in WO 86/03212 beschrieben. Auch für diese Anmeldung gilt das obengesagte.

Es können auch als Polyamide A) solche eingesetzt werden, die gemäß der eigenen, bisher unveröffentlichten Patentanmeldung P 3 914 715.0 (Le A 26 894) bei Anwesenheit von z.B. Polyphenylensulfid B) hergestellt werden.

Die erfindungsgemäßen Mischungen A)-D) vereinigen die Vorteile der Phenolmodifizierung, nämlich reduzierte Wasseraufnahme und Wasseraufnahmegeschwindigkeit, erhöhte Dimensionsstabilität, sowie gegebenenfalls verbesserte Fließfähigkeit, Oberflächengüte und andere mehr, mit einer verbesserten Farbe bzw. Farbstabilität durch den Stabilisator B). Dies äußert sich dadurch, daß die Mischungen A)-D) gegenüber Mischungen, die die Komponente B) nicht enthalten, je nach Additiv C), beispielsweise nach der Compoundierung und Verarbeitung, heller (weißer) wirken. Die farbstabilisierende Wirkung kann aber auch erst bei einer Heißwasserlagerung (Schnellkonditionierung) oder einer erhöhten Einsatztemperatur, je nach Additiv C), wirksam werden. Dieser farbstabilisierende bzw. farbverbessernde Effekt der erfindungsgemäßen Kombination war unerwartet und aus dem Stand der Technik nicht ableitbar.

Weiterhin können die Additive B) in den erfindungsgemäßen Formmassen eine weiterhin verbesserte Oberfläche sowie eine erhöhte Steifigkeit, Festigkeit und Wärmeformbeständigkeit bewirken. Auch das Erstarrungsverhalten beim Abkühlen und die Fließfähigkeit sind vielfach verbessert.

Sie stellen daher eine wertvolle Bereicherung des Standes der Technik dar.

Die nachfolgenden Beispielen erläutern die Erfindung, ohne sie darauf einzuschränken. Insbesondere charakterisieren die Einzelbeispiele auch daraus zu bildende Bereiche bzw. Stoffgruppen.

## Beispiele

### Beispiele 1-3

Polyamid 6 ($\eta_{rel} \cong 3{,}5$; m-Kresol, 25 °C, 1 %ige-Lösung)-Granulat wurde einmal mit 10 Gew.-% (bezogen auf Mischung) eines Phenol-Formaldehyd-Novolaks (Phenol: $CH_2O$ = 1:0,78), einmal mit 10 % desselben Novolaks und zusätzlich 1 Gew.-% eines Poly-p-phenylensulfids der Schmelzviskosität 39 Pas (bei 310 °C und einem Schergefälle von $1.000 s^{-1}$), und einmal ohne Additive über einen ZSK-53-Doppelwellenextruder compoundiert. Die Stränge wurden in einem Wasserbad abgekühlt, gehäckselt und getrocknet.

Die optische Farbbeurteilung am Strang sowie YI-Werte an Farbmusterplatten sind in Tabelle 1 zusammengestellt.

Tabelle 1

| Beispiel | Novolak [%] | PPS [%] | T 1) [°C] | Farbe | YI-Wert |
|---|---|---|---|---|---|
| 1 | - | - | 260 | weiß | - 7,8 |
| 2 | 10 | - | 260 | gelb | 55 |
| 3 | 10 | 1 | 280 | hell-gelb | 31 |

1) Compoundiertemperatur

Beispiele 4-7

PA6 ($\eta_{rel} \cong 3,5$) wurde mit 10 % (bezogen auf Compound) Bisphenol A bzw. 10 % Bisphenol A und 0,5, 1,0 und 2,0 Gew.-% (bezogen auf Compound) PPS der Schmelzviskosität 39 Pas bei 310 °C und $1.000 s^{-1}$ über einen ZSK53-Doppelwellenextruder compoundiert.

Anschließend wurden 80•10•4 mm Stäbchen gespritzt und die Farbe optisch beurteilt (Tabelle 2).

Beispiele 8-11

Die Stäbchen der Beispiele 4-7 wurden 100 h lang bei 70 °C in Wasser gelagert und anschließend die Farbe optisch beurteilt (Tabelle 2). Die Wasseraufnahmewerte sind ebenfalls in Tabelle 2 enthalten.

Tabelle 2

| Beispiel | Bisphenol A [%] | PPS [%] | $T^{1)}$ [°C] | $H_2O$-Lagerung | Farbe | $H_2O$-Aufnahme$^{2)}$ (%) |
|---|---|---|---|---|---|---|
| PA 6 | - | - | 260 | - | weiß | 9,4 |
| 4 | 10 | - | " | - | gelblich | - |
| 5 | " | 0,5 | 280 | - | hellgelb | - |
| 6 | " | 1,0 | " | - | weiß | - |
| 7 | " | 2,0 | " | - | weiß | - |
| 8 | 10 | - | - | 100h/70° C | bräunlich | 6,45 |
| 9 | " | 0,5 | - | " | hellbraun | 6,5 |
| 10 | " | 1,0 | - | " | leicht beige | 6,3 |
| 11 | " | 2,0 | - | " | leicht beige | 5,9 |

1) Compoundiertemperatur
2) 70° C, 100 h

Beispiele 12-15

Durch Differential-Seanning Calorimetrie (DSC) wurden isotherme Kristallisationszeiten (Tabelle 3) sowie Schmelzpunkte ($T_s$) und Schmelzwärmen ($\Delta H_s$) (Tabelle 4) von den Proben der Beispiele 4,6 und 7 sowie

der reinen PA ohne Additive bestimmt.

Beispiele 16-22

In der für die Beispiele 1-3 beschriebenen Weise wurde PA 6 ($\eta$rel = 3,5) mit 10 % desselben Novolaks und verschiedenen Mengen PPS (76 Pas; 306 °C, 1.000s$^{-1}$) compoundiert. Die Farbe wurde am Strang optisch beurteilt (Tabelle 5).

Tabelle 3

| Beispiel | Bisphenol A [%] | PPS [%] | $T_k$ [min] bei T [°C] 3) 195 | 200 | 205 |
|---|---|---|---|---|---|
| 12 | - | - | 1,6 | 4,5 | 16,2 |
| 13 | 10 | - | 4,9 | 17,1 | > 30 |
| 14 | 10 | 1 | 2,1 | 8,7 | > 30 |
| 15 | 10 | 2 | 2,6 | 13,5 | > 30 |

Tabelle 4

| Beispiel | Bisphenol A [%] | PPS [%] | $T_s$ [°C] | $\Delta H_s$ [J/g] |
|---|---|---|---|---|
| 12 | - | - | 220,6 | 61,3 |
| 13 | 10 | - | 215,2 | 59,5 |
| 14 | 10 | 1 | - | - |
| 15 | 10 | 2 | 213,8 | 55,1 |

1) $T_k$ = isotherme Kristallisationszeiten (DSC).

Man sieht, daß durch PPS-Zusatz (B) die Kristallisationsgeschwindigkeit deutlich erhöht wird, ohne daß die Schmelzwärme ansteigt, d.h., es handelt sich überraschenderweise nicht um ein Nukleierungsphäno-

men.

Tabelle 5

| Bsp. | Novolak [%] | PPS [%] | T1) [° C] | Farbe |
|---|---|---|---|---|
| 16 | - | - | 260 | weiß |
| 17 | 10 | - | " | gelb |
| 18 | " | 1 | 280 | hellgelb |
| 19 | " | 2 | " | leicht gelb |
| 20 | " | 5 | " | fast weiß |
| 21 | " | 10 | " | " |
| 22 | " | 20 | " | " |

Die Beispiele zeigen, daß durch erfindungsgemäßen PPS-Zusatz die Farbe (Farbstabilität) der phenolhaltigen Formmassen deutlich verbessert werden kann, und daß auch das Kristallisationsverhalten verbessert sein kann. Weiterhin kann die Wasseraufnahme der phenolhaltigen Polyamidmassen u.U. noch weiter reduziert sein.

## Patentansprüche

**1.** Polyamid-Formmassen, enthaltend
A) mindestens 50 Gew.-% aliphatischer Polyamide,
B) 0,1 - 40 Gew.-% an polymeren Additiven mit überwiegendem Strukturelement (I),

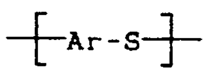

(I)

wobei Ar einen gegebenenfalls substituierten Arylenrest bedeutet,
C) 1 bis 25 Gew.-% an Bis- oder Polyphenolen, die keine tertiären Alkylgruppen ortho-ständig zu den OH-Gruppen tragen sollen
sowie gegebenenfalls zusätzlich
D) bis 150 Gew.-%, bezogen auf die Summe von A) bis C), weiterer üblicher Zusatzstoffe.

**2.** Polyamid-Formmassen nach Anspruch 1, dadurch gekennzeichnet, daß als polymere Additive B) bevorzugt teilkristalline Homo- und Copolymere mit dem überwiegenden Strukturelement (III),

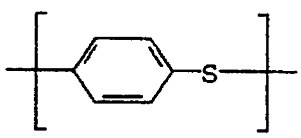

(III)

und besonders bevorzugt das Homopolymere des Bausteins (III), Poly-p-phenylensulfid eingesetzt werden, wobei die Schmelzviskositäten der Additive B) (bei 320 °C und 1000 $s^{-1}$) im Bereich von ungefähr 5 bis ungefähr 500 Pas, bevorzugt 10-200 Pas und besonders bevorzugt 10-150 Pas, liegen, und wobei bevorzugt solche Arylensulfidpolymeren eingesetzt werden, die ohne nachträglichen oxidativen Molekulargewichtsaufbau, sondern in einem Schritt in Lösung direkt zu hohen Molekulargewichten kondensiert wurden.

**3.** Polyamid-Formmassen nach Ansprüchen 1 und 2, dadurch gekennzeichnet, daß als Bis- bzw. Polyphenole C) bevorzugt solche der Formel (VI),

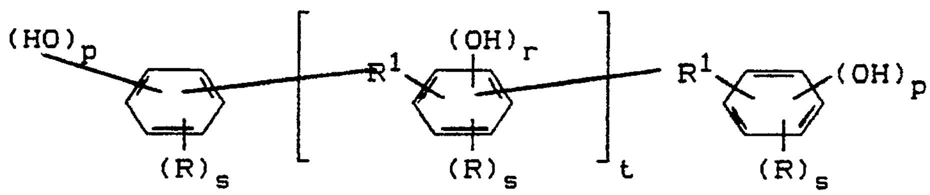

(VI)

wobei

R

unabhängig voneinander Wasserstoff (H), $C_1$-$C_{20}$-(Ar)Alkyl und $C_6$-$C_{18}$-(Alk)aryl, bzw. $C_{1-20}$-(Ar)-alkyloxy- und $C_6$-$C_{18}$-(Alk)aryloxyreste,

$R^1$

unabhängig voneinander eine chemische Bindung, einen $C_1$-$C_{20}$-Alkylen oder (gegebenenfalls cyclischen) Alkyliden-Rest, eine Ester-, eine Amidgruppe, -O-, -SO-, $SO_2$-, -S-, -CO-,

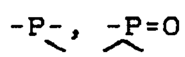

oder auch eine Annellierung zweier oder mehrerer Ringe,

P

1 oder 2, besonders bevorzugt 1,

r

für die Zahlen 0, 1 oder 2, besonders bevorzugt 1,

s

für die Zahlen 0, 1 oder 2, besonders bevorzugt 0 oder 1,

t

eine Zahl von 0-15 (Mittelwert), besonders bevorzugt 0-12,

bedeuten, und wobei kein zu einer OH-Gruppe orthoständiger Rest eine tertiäre Alkylgruppe sein soll, eingesetzt werden.

**4.** Polyamid-Formmassen nach Ansprüchen 1 bis 3, dadurch gekennzeichnet, daß als Bis- bzw. Polyphenole C) besonders bevorzugt eingesetzt werden: 2,2-(Bis-4-hydroxy-phenyl)-propan(Bisphenol A), Bis-4-hydroxphenylmethan (Bisphenol F), 1,1-(Bis-4-hydroxy-phenyl)-cyclohexan (Bisphenol Z), 2,2-Bis-(4-hydroxy-3,5-dimethylphenyl)-propan, 1,1-Bis(4-hydroxyphenyl)-3,3,5-trimethylcyclohexan, 4,4'-Dihydroxydiphenylsulfon sowie Novolake der Formel

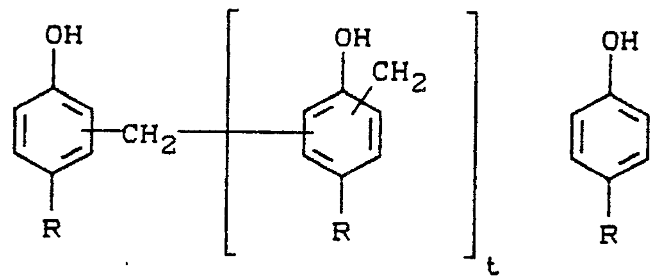

(VII)

worin
R
Wasserstoff oder $C_{1-5}$-Alkyl oder Phenyl, insbesondere Wasserstoff, und t eine ganze Zahl von (Mittelwert) 1 bis 10 bedeuten, so daß ihr Molekulargewicht ($\overline{M}n$) zwischen ca. 300 und ca. 1500 g/mol$^{-1}$ liegt.

5. Polyamid-Formmmassen nach Ansprüchen 1 bis 4, dadurch gekennzeichnet, daß die Polymeren B) i.a. bevorzugt zu 0,4-20 und besonders bevorzugt zu 0,5 bis 10 Gew.-% eingesetzt werden, wobei in besonderen Fällen, z.B. dann, wenn eine besondere Flammfestigkeit gewünscht wird, die bevorzugte Maximalmenge auch bei 20 Gew.-% und insbesondere bei 15 Gew.-% liegen kann, und daß die Bis- bzw. Polyphenole C) i.a. bevorzugt zu 2-20 Gew.-% und besonders bevorzugt zu 5-15 Gew.-% eingesetzt werden, wobei in besonderen Fällen, z.B. für Pultrusionsanwendungen und zur Herstellung anderer Verbundwerkstoffe, auch eine Maximalmenge bis 25 Gew.-% bevorzugt und eine solche bis 20 Gew.-% besonders bevorzugt sein kann.

6. Polyamid-Formmassen nach Ansprüchen 1 bis 5, dadurch gekennzeichnet, daß als Polyamide A) bevorzugt PA6, 66, 610, 69, 46, 11, 12, 1212, 6/66-Copolyamide, Copolyamide auf Basis von Terephthalsäure, Hexamethylendiamin und Caprolactam oder Adipinsäure und andere Copolyamide auf Basis PA6 oder 66 und besonders bevorzugt PA6, 66 und Copolyamide auf Basis PA6 bzw. 66 eingesetzt werden.

7. Polyamid-Formmassen nach Ansprüchen 1 bis 6, dadurch gekennzeichnet, daß als Zusatzstoffe D) beispielsweise Füllstoffe bzw. Verstärkungsstoffe (Glasfasern, Glaskugeln, Kohlenstofffasern, Aramidfasern, $TiO_2$, mineralische Füllstoffe u.a.m), UV-Stabilisatoren, Antioxidantien, polymere Legierungspartner, Pigmente, Farbstoffe, Nukleierungsmittel, Kristallisationsbeschleuniger- bzw. Verzögerer, Fließhilfsmittel, Gleitmittel, Entformungsmittel, Flammschutzmittel u.a.m., wie sie im Stand der Technik beschrieben sind, eingesetzt werden.

8. Verfahren zur Herstellung der Polyamid-Formmassen nach Ansprüchen 1 bis 7, dadurch gekennzeichnet, daß die Komponenten, gegebenenfalls vorvermischt, gegebenenfalls in mehreren Schritten, als reine Stoffe oder als Konzentrate, in der Schmelze miteinander vermischt werden.

9. Verwendung der Formmassen nach Ansprüchen 1-7 zur Herstellung von Formkörpern, Folien, Fasern, (verstärkten) Halbzeugen, Verbundwerkstoffen (Composites) u.a.m., nach z.B. Verfahren des Spritzgießens, der Extrusion, der Pultrusion, des "filmstacking" u.a.m.

10. Formkörper, Folien, Fasern, (verstärkte) Halbzeuge, Verbundwerkstoffe (Composites) u.a. Gegenstände aus Polyamid-Formmassen nach Ansprüchen 1 bis 7.